# EUROPÄISCHE PATENTANMELDUNG

(11) **EP 4 574 389 A1**
(43) Veröffentlichungstag der Anmeldung: **25.06.2025**
(21) Anmeldenummer: 24222263.6
(22) Anmeldetag: 20.12.2024
(51) Int. Cl.: B29C 45/00, B29C 45/16

(54) **VERFAHREN ZUR HERSTELLUNG EINES, WENIGSTENS EINE MASKIERSCHICHT AUFWEISENDEN, PARTIELL DURCHLEUCHTBAREN AUSSENVERKLEIDUNGSTEILS FÜR EIN FAHRZEUG**

(30) Priorität: 21.12.2023 DE 102023136363
(71) Anmelder: REHAU Automotive SE & Co. KG, 95111 Rehau (DE)
(72) Erfinder: Jäger, Christoph, 95111 Rehau (DE); Reichstein, Johann, 95448 Bayreuth (DE); Rothe, Marco, 95111 Rehau (DE)

(57) **Zusammenfassung**

Die Erfindung betrifft ein Verfahren zur Herstellung eines, wenigstens eine Maskierschicht (1) aufweisenden, partiell durchleuchtbaren Außenverkleidungsteils für ein Fahrzeug, wobei die Maskierschicht (1) auf einem dünnwandigen, die Geometrie des Außenverkleidungsteils zumindest teilweise definierenden Grundbauteil (2) aufgebracht wird, wobei das Grundbauteil (2) eine in der bestimmungsgemäßen Verwendung sichtbare Außenseite (A) und eine der Außenseite (A) gegenüberliegende Rückseite aufweist, wobei das Grundbauteil (2) mittels eines Spitzgussverfahrens in einem Spritzgusswerkzeug (3) urgeformt wird, wobei das Spritzgusswerkzeug (3) wenigstens zwei Werkzeugformhälften (3a, 3b) aufweist, die im geschlossenen Zustand zwischen sich eine das Grundbauteil (2) definierende Kavität (4) ausbilden, wobei das Verfahren folgende Schrittreihenfolge aufweist: Urformen des Grundbauteils (2) durch Einbringen wenigstens eines das Grundbauteil (2) bildenden Kunststoffmaterials (K) in die Kavität (4), wobei das wenigstens eine Kunststoffmaterial ein transparentes oder transluzentes Polymermaterial umfasst, insbesondere Polycarbonat (PC), oder Polypropylen (PP) oder Polymethylmethacrylat (PMMA) oder Acrylnitril-Butadien-Styrol-Copolymer (ABS) oder Polycarbonat - Acrylnitril-Butadien-Styrol - Copolymere (PC-ABS Copolymere) umfasst, Verfestigen des Kunststoffmaterials (K), teilweises oder vollständiges Öffnen der Werkzeughälften (3a, 3b), sodass zumindest ein Teilbereich (5) der Oberfläche des urgeformten Grundbauteils (2) frei zugänglich wird, wobei das Grundbauteil (2) hierbei weiterhin von wenigstens einer der Werkzeugformhälften (3a) und/oder von wenigstens einem, in wenigstens einer der Werkzeugformhälften (3a) integrierten, Auswerfer lagefixiert wird, Aufbringen der Maskierschicht (1) auf den Teilbereich (5) des Grundbauteils (2) mittels eines Beschichtungsverfahrens, während das Grundbauteil (2) weiterhin in oder an der Werkzeugformhälfte (3a) lagefixiert ist, Strukturieren oder Perforieren oder teilweises Entfernen der Maskierschicht (1) mittels hochenergetischer Laserstrahlung (L), während das Grundbauteil weiterhin in oder an der Werkzeugformhälfte (3a) lagefixiert ist, vollständiges Entformen und Entnehmen des Grundbauteils (2) aus dem Spritzgusswerkzeug (3).

## Beschreibung

Die vorliegende Erfindung betrifft ein Verfahren zur Herstellung eines, wenigstens eine Maskierschicht aufweisenden, partiell durchleuchtbaren Außenverkleidungsteils für ein Fahrzeug, wobei die Maskierschicht auf einem dünnwandigen, die Geometrie des Außenverkleidungsteils zumindest teilweise definierenden Grundbauteil aufgebracht wird, wobei das Grundbauteil eine in der bestimmungsgemäßen Verwendung sichtbare Außenseite und eine der Außenseite gegenüberliegende Rückseite aufweist, wobei das Grundbauteil mittels eines Spitzgussverfahrens in einem Spritzgusswerkzeug urgeformt wird, wobei das Spritzgusswerkzeug wenigstens zwei Werkzeugformhälften aufweist, die im geschlossenen Zustand zwischen sich eine das Grundbauteil definierende Kavität ausbilden.

Bei aus dem Stand der Technik bekannten Verfahren erfolgt das Aufbringen der wenigstens einen Maskierschicht auf dem Grundbauteil, nachdem dieses in einem Spritzgussverfahren hergestellt wurde. Hierfür muss das Grundbauteil in zusätzlichen Verfahrensschritten wieder in Lackiergestellen aufgenommen und Lackierstraßen zugeführt werden. Eine nachfolgende Bearbeitung der Maskierschicht, um diese partiell durchleuchtbar zu machen, erfolgt in der Regel ebenfalls in einer weiteren, separaten Bearbeitungsstation.

Diese zusätzlichen Verfahrensschritten sind zeitaufwendig und daher kostenintensiv.

Die Erfindung stellt sich daher die Aufgabe ein Verfahren mit den eingangs beschriebenen Merkmalen anzugeben, das gegenüber dem Stand der Technik die schnellere und kostengünstigere Herstellung eines wenigstens eine Maskierschicht aufweisenden Bauteils für ein Fahrzeug ermöglicht.

Erfindungsgemäß wird diese Aufgabe durch folgendes Verfahren gelöst:
Verfahren zur Herstellung eines, wenigstens eine Maskierschicht aufweisenden, partiell durchleuchtbaren Außenverkleidungsteils für ein Fahrzeug, wobei die Maskierschicht auf einem dünnwandigen, die Geometrie des Außenverkleidungsteils zumindest teilweise definierenden Grundbauteil aufgebracht wird, wobei das Grundbauteil eine in der bestimmungsgemäßen Verwendung sichtbare Außenseite und eine der Außenseite gegenüberliegende Rückseite aufweist, wobei das Grundbauteil mittels eines Spitzgussverfahrens in einem Spritzgusswerkzeug urgeformt wird, wobei das Spritzgusswerkzeug wenigstens zwei Werkzeugformhälften aufweist, die im geschlossenen

Zustand zwischen sich eine das Grundbauteil definierende Kavität ausbilden, wobei das Verfahren folgende Schrittreihenfolge aufweist:
- Urformen des Grundbauteils durch Einbringen wenigstens eines das Grundbauteil bildenden Kunststoffmaterials in die Kavität, wobei das wenigstens eine Kunststoffmaterial ein transparentes oder transluzentes Polymermaterial umfasst, insbesondere Polycarbonat (PC), oder Polypropylen (PP) oder Polymethylmethacrylat (PMMA) oder Acrylnitril-Butadien-Styrol-Copolymer (ABS) oder Polycarbonat - Acrylnitril-Butadien-Styrol - Copolymere (PC-ABS Copolymere) umfasst,
- Verfestigen des Kunststoffmaterials,
- teilweises oder vollständiges Öffnen der Werkzeughälften, sodass zumindest ein Teilbereich der Oberfläche des urgeformten Grundbauteils frei zugänglich wird, wobei das Grundbauteil hierbei weiterhin von wenigstens einer der Werkzeugformhälften und/oder von wenigstens einem, in wenigstens einer der Werkzeugformhälften integrierten, Auswerfer lagefixiert wird,
- Aufbringen der Maskierschicht auf den Teilbereich des Grundbauteils mittels eines Beschichtungsverfahrens, während das Grundbauteil weiterhin in oder an der Werkzeugform hälfte lagefixiert ist,
   - Strukturieren oder Perforieren oder teilweises Entfernen der Maskierschicht (1) mittels hochenergetischer Laserstrahlung (L), während das Grundbauteil weiterhin in oder an der Werkzeugformhälfte lagefixiert ist,
- vollständiges Entformen und Entnehmen des Grundbauteils (2) aus dem Spritzgusswerkzeug (3).

Die Integration des Beschichtungsverfahrens und der Bearbeitung der Maskierschicht mittels Laserstrahlung innerhalb des Prozessablaufs des Spritzgießens, erlaubt es eine effiziente und kostengünstigere Herstellung eines Außenverkleidungsteils anzugeben.

Der Tintenstrahldruckerkopf kann während des Aufbringens der Maskierschicht über den Teil-bereich des Grundbauteils bewegt werden.

Die Laserstrahlung kann mittels eines Reflexionsspiegels über die Maskierschicht gelenkt werden. Alternativ kann die Laserstrahlung mittels eines Laserstrahlungsemitters auf die Maskierschicht eingestrahlt werden, wobei der Laserstrahlemitter über den Teilbereich des Grundbauteils (z.B. mittels eines Roboters oder einer linearen Verfahreinheit) bewegt wird. Der Laserstrahlemitter kann mittels eines Manipulators vor den Teilbereich des Grundbauteils gefahren und dort in allen Raumrichtungen bewegt werden.

Das Beschichtungsverfahren kann beispielsweise ein Tintenstrahldruckverfahren umfassen, wobei zur Ausbildung der Maskierschicht wenigstens eine flüssige oder pulverförmige Pigmenttinte oder wenigstens eine flüssige oder pulverförmige Farbstofftinte mittels eines Tintenstrahldruckerkopfs auf den Teilbereich aufgebracht wird, wobei der Tintenstrahldruckerkopf während des Aufbringens der Maskierschicht über den Teilbereich des Grundbauteils bewegt wird.

Das Beschichtungsverfahren kann als mögliche Alternativen auch ein Folienapplikationsverfahren oder ein Verfahren zum Aufbringen einer Lackschicht, insbesondere ein Sprühlackierverfahren oder ein Tampondruckverfahren umfassen.

Parallel zu oder nach dem Schritt des Aufbringens der Maskierschicht kann ein zeitgleiches oder nachfolgendes Aushärten und/oder Verfestigen der Maskierschicht vorgesehen werden, wobei das Aushärten und/oder Verfestigen partiell oder vollständig erfolgt, wobei das Aushärten und/oder Verfestigen insbesondere durch eine zusätzliche Energiezufuhr ermöglicht und/oder beschleunigt wird.

Es können insbesondere UV härtende Lacke (also Lacke die durch ultraviolettes Licht aushärten) als Basis für die Lackschicht oder die flüssige Pigmenttinte oder die flüssige Farbstofftinte verwendet werden. Für den Fall der Verwendung eines Tintenstrahldruckverfahrens kann dann wenigstens eine UV-Lichtquelle mit dem Tintenstahldruckkopf gekoppelt sein. Weiter bevorzugt befindet sich in jeder Bewegungsrichtung (insbesondere in der Vor- und Rückwärtsrichtung) des Tintenstrahldruckkopfes eine in der jeweiligen Bewegungsrichtung vorlaufend angeordnete UV-Lichtquelle an dem Tintenstrahldruckkopf.

Die Maskierschicht kann in sich durch eine Vielzahl von Einzelschichten aufgebaut werden oder aufgebaut sein. Das heißt die Maskierschicht kann insbesondere aus wenigstens zwei oder mehr Einzelschichten aufgebaut sein.

Die Maskierschicht kann in mehreren, nebeneinanderliegenden Bahnen aufgebracht werden. Die Maskierschicht muss folglich nicht zwingend in einem Durchlauf auf den Teilbereich des Grundbauteils aufgebracht werden, sondern kann beispielsweise in mehreren Bahnen aufgebracht werden. Die nebeneinanderliegenden Bahnen können sich hierbei auch in ihren Randbereichen überlappen.

Beim Schritt des Urformens des Grundbauteils kann wenigstens ein weiteres Kunststoffmaterial in die Kavität eingebracht werden, welches zusammen mit dem wenigstens einen Kunststoffmaterial das Grundbauteil bildet. Das weitere Kunststoffmaterial kann beispielsweise ein Montage-, oder Befestigungs-, oder Dichtungselement ausbilden.

Nach dem Schritt des Aufbringens der Maskierschicht können die Werkzeugformhälften wieder um das mit der Maskierschicht versehene Grundbauteil herum geschlossen und nachfolgend ein Versiegelungsmaterial, insbesondere Polyurea oder Polyurethan umfassendes Versiegelungsmaterial, auf der Maskierschicht und/oder dem Grundbauteil angeordnet werden. Hierfür werden die Werkzeugformhälften nicht vollständig geschlossen, sodass sich ein Zwischenraum zwischen einer der Werkzeugformhälften und dem Grundbauteil bildet, der mit dem Versiegelungsmaterial gefüllt wird.

Nach dem Schritt des Aufbringens der Maskierschicht kann eine der Werkzeugformhälften zusammen mit einer Wechselwerkzeugformhälfte um das mit der Maskierschicht versehene Grundbauteil herum geschlossen und nachfolgend ein Versiegelungsmaterial, insbesondere Polyurea oder Polyurethan umfassendes Versiegelungsmaterial, auf der Maskierschicht und/oder dem Grundbauteil angeordnet werden.

Beim Schritt des Urformens des Grundbauteils kann wenigstens ein in der Kavität angeordnetes Einlegeteil von dem Kunststoffmaterial hinterspritzt, umspritzt oder überspritzt werden. Das Einlegeteil kann eine Dekorfolie und/oder eine Funktionsfolie sein. Im Fall einer Funktionsfolie kann die Funktionsfolie wenigstens einen Heizdraht oder wenigstens einen Antennendraht oder wenigstens eine elektrische Schaltung oder wenigstens eine Leuchtdiode aufweisen.

Das Außenverkleidungsteil kann beispielsweise eine Stoßfängerverkleidung oder eine Kühlergrillverkleidung oder eine Kotflügelverkleidung oder eine A-, B-, C-, oder D-Säulenverkleidung oder eine Spoileraußenhaut oder eine Schwellerverkleidung oder eine Türaußenverkleidung oder eine Türklappenaußenverkleidung oder eine Frontmaske sein.

Das Außenverkleidungsteil kann einen Bestandteil einer Stoßfängerverkleidung oder einer Kühlergrillverkleidung oder einer Kotflügelverkleidung oder einer A-, B-, C-, oder D-Säulenverkleidung oder einer Spoileraußenhaut oder einer Schwellerverkleidung oder einer Türaußenverkleidung oder einer Türklappenaußenverkleidung oder einer Frontmaske bilden.

Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

Weiterhin Teil der Erfindung ist ein Außenverkleidungsteil, das mit dem vorstehend beschriebenen Verfahren hergestellt ist.

Im Folgenden wird die Erfindung anhand lediglich Ausführungsbeispiele darstellender Zeichnungen erläutert. Es zeigen schematisch:
- Fig. 1 und 2: Verfahrensschritt des Urformens des Grundbauteils;
- Fig. 3: Verfahrensschritt des Öffnens der Werkzeughälften und des Aufbringens der Maskierschicht;
- Fig. 4: Verfahrensschritt des Strukturierens oder Perforieren oder teilweises Entfernen der Maskierschicht;
- Fig. 5: Verfahrensschritt des Entformens des Grundbauteils;
- Fig. 6: ein partiell durchleuchtbares Außenverkleidungsteils;
- Fig. 7 und 8: eine Variante des Verfahrens.

In den Figuren werden gleiche oder funktionsgleiche Elemente mit den gleichen Bezugszeichen versehen.

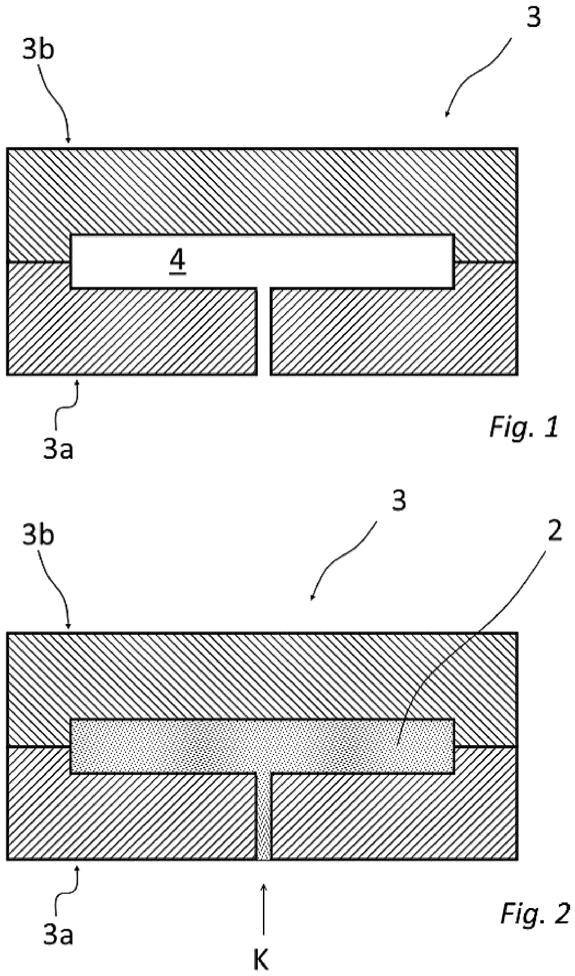

In den Fig. 1 bis 5 wird ein Verfahren zur Herstellung eines, wenigstens eine Maskierschicht aufweisenden, partiell durchleuchtbaren Außenverkleidungsteils für ein Fahrzeug beschrieben.

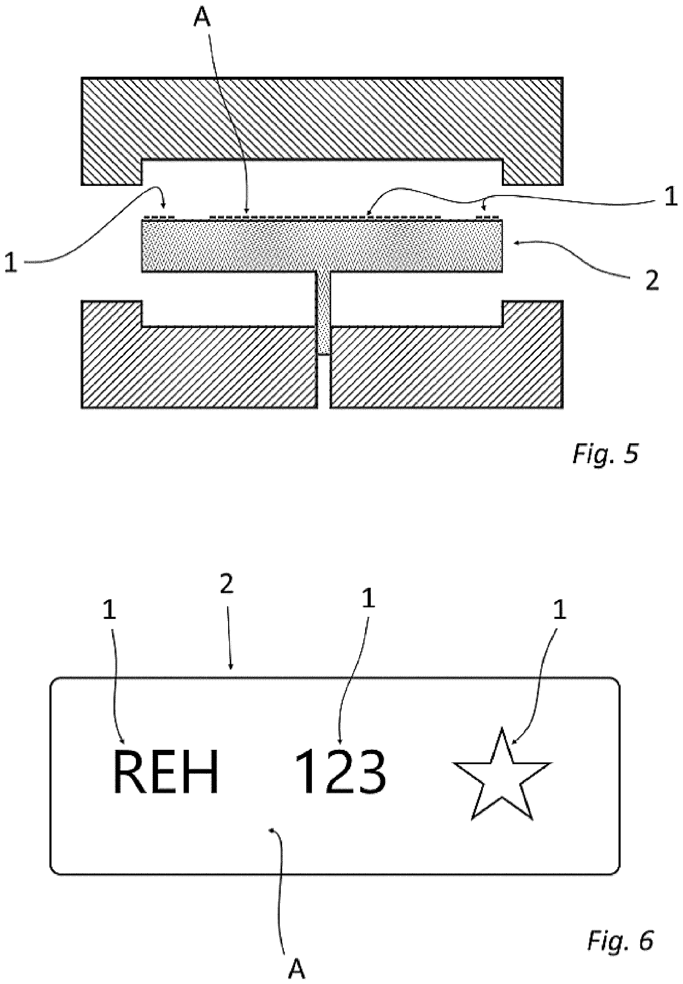

Die Maskierschicht 1 wird auf einem dünnwandigen, die Geometrie des Außenverkleidungsteils zumindest teilweise definierenden Grundbauteil 2 aufgebracht. Das Grundbauteil 2 weist eine in der bestimmungsgemäßen Verwendung sichtbare Außenseite A und eine der Außenseite A gegenüberliegende Rückseite auf (vgl. Fig. 6).

Das Grundbauteil 2 wird mittels eines Spitzgussverfahrens in einem Spritzgusswerkzeug 3 urgeformt, wobei das Spritzgusswerkzeug 3 wenigstens zwei Werkzeugformhälften 3a, 3b aufweist, die im geschlossenen Zustand zwischen sich eine das Grundbauteil 2 definierende Kavität 4 ausbilden (vgl. Fig. 1).

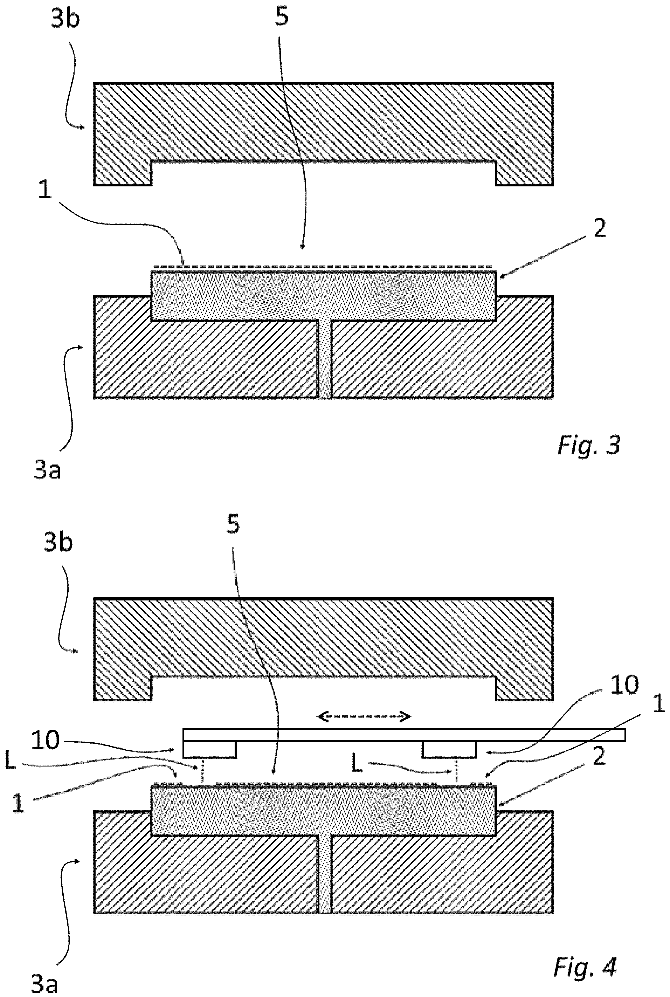

Das Verfahren weist folgende Schrittreihenfolge auf:
- Urformen des Grundbauteils 2 durch Einbringen wenigstens eines das Grundbauteil 2 bildenden Kunststoffmaterials K in die Kavität 4, wobei das wenigstens eine Kunststoffmaterial ein transparentes oder transluzentes Polymermaterial umfasst, insbesondere Polycarbonat (PC), oder Polypropylen (PP) oder Polymethylmethacrylat (PMMA) oder Acrylnitril-Butadien-Styrol-Copolymer (ABS) oder Polycarbonat - Acrylnitril-Butadien-Styrol - Copolymere (PC-ABS Copolymere) umfasst, (vgl. Fig. 2),
- Verfestigen des Kunststoffmaterials K vgl. Fig. 2,
- teilweises oder vollständiges Öffnen der Werkzeughälften 3a, 3b, sodass zumindest ein Teilbereich 5 der Oberfläche des urgeformten Grundbauteils 2 frei zugänglich wird, wobei das Grundbauteil 2 hierbei weiterhin von wenigstens einer der Werkzeugformhälften 3a und/oder von wenigstens einem, in wenigstens einer der Werkzeugformhälften 3a integrierten, Auswerfer lagefixiert wird (vgl. Fig. 3),
- Strukturieren oder Perforieren oder teilweises Entfernen der Maskierschicht 1 mittels hochenergetischer Laserstrahlung L, während das Grundbauteil weiterhin in oder an der Werkzeugformhälfte 3a lagefixiert ist (vgl. Fig. 4),
- vollständiges Entformen und entnehmen des Grundbauteils 2 aus dem Spritzgusswerkzeug 3 (vgl. Fig. 5).

Die Laserstrahlung L kann mittels eines Reflexionsspiegels über die Maskierschicht 1 gelenkt werden. In dem vorliegenden Ausführungsbeispiel wird die Laserstrahlung L mittels eines Laserstrahlungsemitters 10 auf die Maskierschicht 1 eingestrahlt, wobei der Laserstrahlemitter 10 über den Teilbereich 5 des Grundbauteils 2 bewegt wird.

Das nicht näher dargestellte Beschichtungsverfahren kann ein Tintenstrahldruckverfahren umfassen, wobei zur Ausbildung der Maskierschicht 1 wenigstens eine flüssige oder pulverförmige Pigmenttinte oder wenigstens eine flüssige oder pulverförmige Farbstofftinte mittels eines Tintenstrahldruckerkopfs auf den Teilbereich 5 aufgebracht wird, wobei der Tintenstrahldruckerkopf während des Aufbringens der Maskierschicht 1 über den Teilbereich 5 des Grundbauteils 2 bewegt wird. Weiter Beschichtungsverfahren können beispielsweise ein Folienapplikationsverfahren oder ein Verfahren zum Aufbringen einer Lackschicht, insbesondere ein Sprühlackierverfahren oder ein Tampondruckverfahren umfassen.

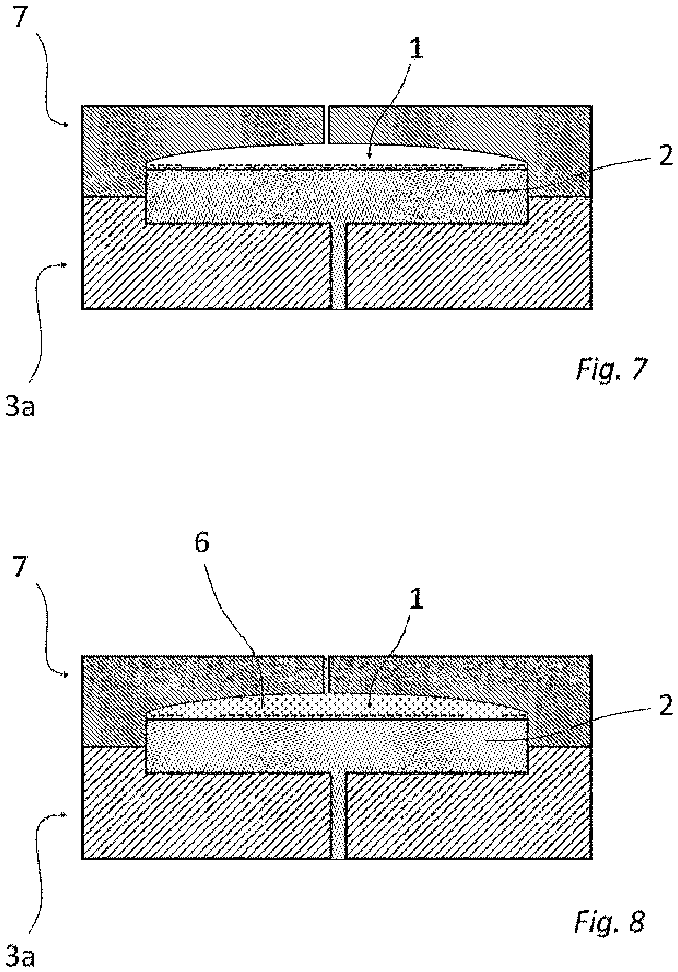

In der Fig. 7 und Fig. 8 ist als Variante dargestellt, dass nach dem Schritt des Aufbringens der Farbschicht 1 eine der Werkzeugformhälften 3a zusammen mit einer Wechselwerkzeugformhälfte 7 um das mit der gelaserten Maskierschicht 1 versehene Grundbauteil 2 herum geschlossen und nachfolgend ein Versiegelungsmaterial 6, insbesondere Polyurea oder Polyurethan umfassendes Versiegelungsmaterial, auf der Maskierschicht 1 und/oder dem Grundbauteil 2 angeordnet wird.

Als Variante des Verfahrens kann beim Schritt des Urformens des Grundbauteils 2 wenigstens ein weiteres Kunststoffmaterial in die Kavität eingebracht werden, welches zusammen mit dem wenigstens einen Kunststoffmaterial das Grundbauteil 2 bildet.

Beim Schritt des Urformens des Grundbauteils 2 kann als Variante wenigstens ein in der Kavität 4 angeordnetes Einlegeteil von dem Kunststoffmaterial hinterspritzt, umspritzt oder überspritzt werden. Das Einlegeteil kann eine Dekorfolie und/oder eine Funktionsfolie sein. Im Fall einer Funktionsfolie kann die Funktionsfolie wenigstens einen Heizdraht oder wenigstens einen Antennendraht oder wenigstens eine elektrische Schaltung oder wenigstens eine Leuchtdiode aufweisen.

Das Außenverkleidungsteil ist eine Stoßfängerverkleidung oder eine Kühlergrillverkleidung oder eine Kotflügelverkleidung oder eine A-, B-, C-, oder D-Säulenverkleidung oder eine Spoileraußenhaut oder eine Schwellerverkleidung oder eine Türaußenverkleidung oder eine Türklappenaußenverkleidung oder eine Frontmaske.

Das Außenverkleidungsteil kann auch einen Bestandteil einer Stoßfängerverkleidung oder einer Kühlergrillverkleidung oder einer Kotflügelverkleidung oder einer A-, B-, C-, oder D-Säulenverkleidung oder einer Spoileraußenhaut oder einer Schwellerverkleidung oder einer Türaußenverkleidung oder einer Türklappenaußenverkleidung oder einer Frontmaske bilden.

## Patentansprüche

1. Verfahren zur Herstellung eines, wenigstens eine Maskierschicht (1) aufweisenden, partiell durchleuchtbaren Außenverkleidungsteils für ein Fahrzeug,
wobei die Maskierschicht (1) auf einem dünnwandigen, die Geometrie des Außenverkleidungsteils zumindest teilweise definierenden Grundbauteil (2) aufgebracht wird,
wobei das Grundbauteil (2) eine in der bestimmungsgemäßen Verwendung sichtbare Außenseite (A) und eine der Außenseite (A) gegenüberliegende Rückseite aufweist,
wobei das Grundbauteil (2) mittels eines Spitzgussverfahrens in einem Spritzgusswerkzeug (3) urgeformt wird, wobei das Spritzgusswerkzeug (3) wenigstens zwei Werkzeugformhälften (3a, 3b) aufweist, die im geschlossenen Zustand zwischen sich eine das Grundbauteil (2) definierende Kavität (4) ausbilden,
**dadurch gekennzeichnet, dass**
das Verfahren folgende Schrittreihenfolge aufweist:
- Urformen des Grundbauteils (2) durch Einbringen wenigstens eines das Grundbauteil (2) bildenden Kunststoffmaterials (K) in die Kavität (4), wobei das wenigstens eine Kunststoffmaterial ein transparentes oder transluzentes Polymermaterial umfasst, insbesondere Polycarbonat (PC), oder Polypropylen (PP) oder Polymethylmethacrylat (PMMA) oder Acrylnitril-Butadien-Styrol-Copolymer (ABS) oder Polycarbonat - Acrylnitril-Butadien-Styrol - Copolymere (PC-ABS Copolymere) umfasst,
- Verfestigen des Kunststoffmaterials (K),
- teilweises oder vollständiges Öffnen der Werkzeughälften (3a, 3b), sodass zumindest ein Teilbereich (5) der Oberfläche des urgeformten Grundbauteils (2) frei zugänglich wird, wobei das Grundbauteil (2) hierbei weiterhin von wenigstens einer der Werkzeugformhälften (3a) und/oder von wenigstens einem, in wenigstens einer der Werkzeugformhälften (3a) integrierten, Auswerfer lagefixiert wird,
- Aufbringen der Maskierschicht (1) auf den Teilbereich (5) des Grundbauteils (2) mittels eines Beschichtungsverfahrens, während das Grundbauteil (2) weiterhin in oder an der Werkzeugformhälfte (3a) lagefixiert ist,
- Strukturieren oder Perforieren oder teilweises Entfernen der Maskierschicht (1) mittels hochenergetischer Laserstrahlung (L), während das Grundbauteil weiterhin in oder an der Werkzeugformhälfte (3a) lagefixiert ist,
- vollständiges Entformen und Entnehmen des Grundbauteils (2) aus dem Spritzgusswerkzeug (3).

2. Verfahren nach Anspruch 1, **dadurch gekennzeichnet, dass** die Laserstrahlung (L) mittels eines Reflexionsspiegels über die Maskierschicht (1) gelenkt wird oder, dass die Laserstrahlung (L) mittels eines Laserstrahlungsemitters (10) auf die Maskierschicht (1) eingestrahlt wird, wobei der Laserstrahlemitter (10) über den Teilbereich (5) des Grundbauteils (2) bewegt wird.

3. Verfahren nach Anspruch 1 oder 2, **dadurch gekennzeichnet, dass** das Beschichtungsverfahren ein Tintenstrahldruckverfahren umfasst, wobei zur Ausbildung der Maskierschicht (1) wenigstens eine flüssige oder pulverförmige Pigmenttinte oder wenigstens eine flüssige oder pulverförmige Farbstofftinte mittels eines Tintenstrahldruckerkopfs auf den Teilbereich (5) aufgebracht wird, wobei der Tintenstrahldruckerkopf während des Aufbringens der Maskierschicht (1) über den Teilbereich (5) des Grundbauteils (2) bewegt wird.

4. Verfahren nach Anspruch 1 oder 2, **dadurch gekennzeichnet, dass** das Beschichtungsverfahren ein Folienapplikationsverfahren oder ein Verfahren zum Aufbringen einer Lackschicht, insbesondere ein Sprühlackierverfahren oder ein Tampondruckverfahren umfasst.

5. Verfahren nach einem der vorstehenden Ansprüche, **dadurch gekennzeichnet, dass** beim Schritt des Urformens des Grundbauteils (2) wenigstens ein weiteres Kunststoffmaterial in die Kavität eingebracht wird, welches zusammen mit dem wenigstens einen Kunststoffmaterial das Grundbauteil (2) bildet.

6. Verfahren nach einem der vorstehenden Ansprüche, **dadurch gekennzeichnet, dass** nach dem Schritt des Strukturierens oder Perforierens oder des teilweise Entfernens der Maskierschicht (1) die Werkzeugformhälften (3a, 3b) wieder um das Grundbauteil (2) herum geschlossen und nachfolgend ein Versiegelungsmaterial (6), insbesondere Polyurea oder Polyurethan umfassendes Versiegelungsmaterial (6), auf der Maskierschicht (1) und/oder dem Grundbauteil (2) angeordnet wird oder, dass nach dem Schritt des Aufbringens der Maskierschicht (1) eine der Werkzeugformhälften (3a) zusammen mit einer Wechselwerkzeugformhälfte (7) um das mit der Maskierschicht (1) versehene Grundbauteil (2) herum geschlossen und nachfolgend ein Versiegelungsmaterial (6), insbesondere Polyurea oder Polyurethan umfassendes Versiegelungsmaterial (6), auf der Maskierschicht (1) und/oder dem Grundbauteil (2) angeordnet wird.

7. Verfahren nach einem der vorstehenden Ansprüche, **dadurch gekennzeichnet, dass** beim Schritt des Urformens des Grundbauteils (2) wenigstens ein in der Kavität (4) angeordnetes Einlegeteil von dem Kunststoffmaterial hinterspritzt, umspritzt oder überspritzt wird.

8. Verfahren nach Anspruch 7, **dadurch gekennzeichnet, dass** das Einlegeteil eine Dekorfolie und/oder eine Funktionsfolie ist.

9. Verfahren nach Anspruch 8, **dadurch gekennzeichnet, dass** die Funktionsfolie wenigstens einen Heizdraht oder wenigstens einen Antennendraht oder wenigstens eine elektrische Schaltung oder wenigstens eine Leuchtdiode aufweist.

10. Verfahren nach einem der vorstehenden Ansprüche, **dadurch gekennzeichnet, dass** das Bauteil ein Außenverkleidungsteil eines Fahrzeuges, insbesondere eine Stoßfängerverkleidung oder eine Kühlergrillverkleidung oder eine Kotflügelverkleidung oder eine A-, B-, C-, oder D-Säulenverkleidung oder eine Spoileraußenhaut oder eine Schwellerverkleidung oder eine Türaußenverkleidung oder eine Türklappenaußenverkleidung oder eine Frontmaske ist, oder einen Bestandteil einer Stoßfängerverkleidung oder einer Kühlergrillverkleidung oder einer Kotflügelverkleidung oder einer A-, B-, C-, oder D-Säulenverkleidung oder einer Spoileraußenhaut oder einer Schwellerverkleidung oder einer Türaußenverkleidung oder einer Türklappenaußenverkleidung oder einer Frontmaske bildet.
